# EUROPÄISCHE PATENTANMELDUNG

(11) **EP 3 772 313 A1**
(43) Veröffentlichungstag der Anmeldung: **10.02.2021**
(21) Anmeldenummer: 19189939.2
(22) Anmeldetag: 05.08.2019
(51) Int. Cl.: A47L 9/24, A47L 7/00

(54) **VORRICHTUNG ZUR KOMPENSATION VON DRUCKSTÖSSEN**

(71) Anmelder: Hilti Aktiengesellschaft, 9494 Schaan (LI)
(72) Erfinder: Kidess, Anton, 86152 Augsburg (DE)
(74) Vertreter: Hilti Aktiengesellschaft Corporate Intellectual Property

(57) **Zusammenfassung**

Vorrichtung für einen Staubsauger zum Kompensieren von Luftdruckstößen, durch welche eine erste Luftströmung in eine erste Strömungsrichtung sowie eine zweite Luftströmung in eine zweite Strömungsrichtung strömen kann.

Die Vorrichtung enthält einen Grundkörper mit einer ersten Durchströmungsquerschnittsfläche und wenigstens einem Strömungswiderstandselement, welches von dem Grundkörper mit einem freien Ende wenigstens abschnittsweise in die zweite Strömungsrichtung ragt, zum Erzeugen einer zweiten Durchströmungsquerschnittsfläche, wobei die erste Durchströmungsquerschnittsfläche größer ist als die zweite Durchströmungsquerschnittsfläche, sodass die in die zweite Strömungsrichtung strömende zweite Luftströmung vermindert wird.

Staubsaugerschlauch mit einer Vorrichtung für einen Staubsauger zum Kompensieren von Luftdruckstößen.

Staubsauger mit einer Vorrichtung für einen Staubsauger zum Kompensieren von Luftdruckstößen.

## Beschreibung

Die vorliegende Erfindung betrifft eine Vorrichtung für einen Staubsauger zum Kompensieren von Luftdruckstößen, durch welche eine erste Luftströmung in eine erste Strömungsrichtung sowie eine zweite Luftströmung in eine zweite Strömungsrichtung strömen kann.

Des Weiteren betrifft die vorliegende Erfindung einen Staubsaugerschlauch mit einer Vorrichtung für einen Staubsauger zum Kompensieren von Luftdruckstößen.

Darüber hinaus betrifft die vorliegende Erfindung einen Staubsauger mit einer Vorrichtung für einen Staubsauger zum Kompensieren von Luftdruckstößen.

Staubsauger gemäß dem Stand der Technik, welche in Verbindung mit einer stauberzeugenden Werkzeugmaschine, insbesondere Bohrhämmer und Sägen, verwendet werden, verfügen für gewöhnlich über ein Filterabreinigungssystem. Es ist dabei möglich, dass die Filterabreinigung mittels einer kurzzeitigen Umkehr der gewöhnlichen Luftströmung durch den zu reinigen Filter geschieht. Der kurzzeitig gegen die gewöhnliche Strömungsrichtung strömende Luftstrom erzeugt einen Druckstoß, der den angesammelten Staub und Dreck aus dem Filter in einen Aufbewahrungsbehälter fallen lässt, sodass anschließend wieder genügend Luft durch den Filter strömen und der Filter eine ausreichende Filterfunktion aufweisen kann.

Der durch die kurzzeitige Umkehr des gewöhnlichen Luftstroms erzeugte Druckstoß wird zum einen von den Anwendern des Staubsaugers als unangenehm empfunden und beeinträchtigt zum anderen die Saugfähigkeit des Staubsaugers.

Es ist somit Aufgabe der vorliegenden Erfindung eine Vorrichtung für einen Staubsauger sowie einen Staubsaugerschlauch mit einer Vorrichtung für einen Staubsauger bereitzustellen, welche das vorstehend genannte Problem löst und die Wirkung des Druckstoßes verringert wird.

Die Aufgabe wird gelöst durch den Gegenstand in Anspruch 1 bzw. durch den Gegenstand in Anspruch 4. Vorteilhafte Ausführungsformen sind in den Unteransprüchen aufgeführt.

Die Aufgabe wird dabei gelöst durch eine Vorrichtung für einen Staubsauger zum Kompensieren von Luftdruckstößen, durch welche eine erste Luftströmung in eine erste Strömungsrichtung sowie eine zweite Luftströmung in eine zweite Strömungsrichtung strömen kann.

Erfindungsgemäß enthält die Vorrichtung einen Grundkörper mit einer ersten Durchströmungsquerschnittsfläche und wenigstens einem Strömungswiderstandselement, welches von dem Grundkörper mit einem freien Ende wenigstens abschnittsweise in die zweite Strömungsrichtung ragt, zum Erzeugen einer zweiten Durchströmungsquerschnittsfläche, wobei die erste Durchströmungsquerschnittsfläche größer ist als die zweite Durchströmungsquerschnittsfläche, sodass die in die zweite Strömungsrichtung strömende zweite Luftströmung vermindert wird.

Gemäß einer vorteilhaften Ausgestaltung der vorliegenden Erfindung kann es möglich sein, dass der Grundkörper in Form eines Zylinders und das wenigstens eine Strömungswiderstandselement in Form eines Trichters ausgestaltet ist, sodass wenigstens abschnittsweise zwischen einer äußeren Mantelfläche des Strömungswiderstandselements und einer inneren Mantelfläche des Grundkörpers ein Stauvolumen für mindestens einen Teil der zweiten Luftströmung entsteht. Hierdurch kann sowohl in radialer und axialer Richtung eine umschlossene Oberfläche an dem Strömungswiderstandselement erzeugen, sodass eine besonders effektive Kompensierung von Luftdruckstößen erreicht wird.

Die Aufgabe wird des Weiteren gelöst durch einen Staubsaugerschlauch mit einer Vorrichtung für einen Staubsauger zum Kompensieren von Luftdruckstößen, durch welche eine erste Luftströmung in eine erste Strömungsrichtung sowie eine zweite Luftströmung in eine zweite Strömungsrichtung strömen kann.

Die Aufgabe wird des Weiteren gelöst durch einen Staubsauger mit einer Vorrichtung für einen Staubsauger zum Kompensieren von Luftdruckstößen, durch welche eine erste Luftströmung in eine erste Strömungsrichtung sowie eine zweite Luftströmung in eine zweite Strömungsrichtung strömen kann.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1a: eine schematische Seitenansicht auf einen Staubsauger mit einem erfindungsgemäßen Staubsaugerschlauch und einer erfindungsgemäßen Vorrichtung zum Kompensieren von Luftdruckstößen gemäß einer ersten Ausführungsform sowie einer ersten Luftströmung in eine erste Strömungsrichtung;
- Figur 1b: eine schematische Seitenansicht auf einen Staubsauger mit dem erfindungsgemäßen Staubsaugerschlauch und der erfindungsgemäßen Vorrichtung zum Kompensieren von Luftdruckstößen gemäß einer ersten Ausführungsform sowie einer zweiten Luftströmung in eine zweite Strömungsrichtung;
- Figur 2: eine schematische Seitenansicht auf einen Staubsauger mit einem erfindungsgemäßen Staubsaugerschlauch mit einer erfindungsgemäßen Vorrichtung zum Kompensieren von Luftdruckstößen gemäß einer zweiten Ausführungsform;
- Figur 3: eine schematische Seitenansicht auf einen Staubsauger mit einem erfindungsgemäßen Staubsaugerschlauch mit einer erfindungsgemäßen Vorrichtung zum Kompensieren von Luftdruckstößen gemäß einer dritten Ausführungsform;
- Figur 4: eine Seitenansicht auf die erfindungsgemäße Vorrichtung zum Kompensieren von Luftdruckstößen gemäß einer ersten Ausführungsform mit einer ersten Luftströmung in eine erste Strömungsrichtung;
- Figur 5: eine Seitenansicht auf die erfindungsgemäße Vorrichtung zum Kompensieren von Luftdruckstößen gemäß der ersten Ausführungsform mit einer zweiten Luftströmung in eine zweite Strömungsrichtung;
- Figur 6: eine Explosionsdarstellung der erfindungsgemäßen Vorrichtung zum Kompensieren von Luftdruckstößen gemäß einer ersten Ausführungsform;
- Figur 7: eine Seitenansicht auf die erfindungsgemäße Vorrichtung zum Kompensieren von Luftdruckstößen gemäß einer zweiten Ausführungsform mit einer ersten Luftströmung in eine erste Strömungsrichtung; und
- Figur 8: eine Explosionsdarstellung der erfindungsgemäßen Vorrichtung zum Kompensieren von Luftdruckstößen gemäß der zweiten Ausführungsform.

### Ausführungsbeispiele:

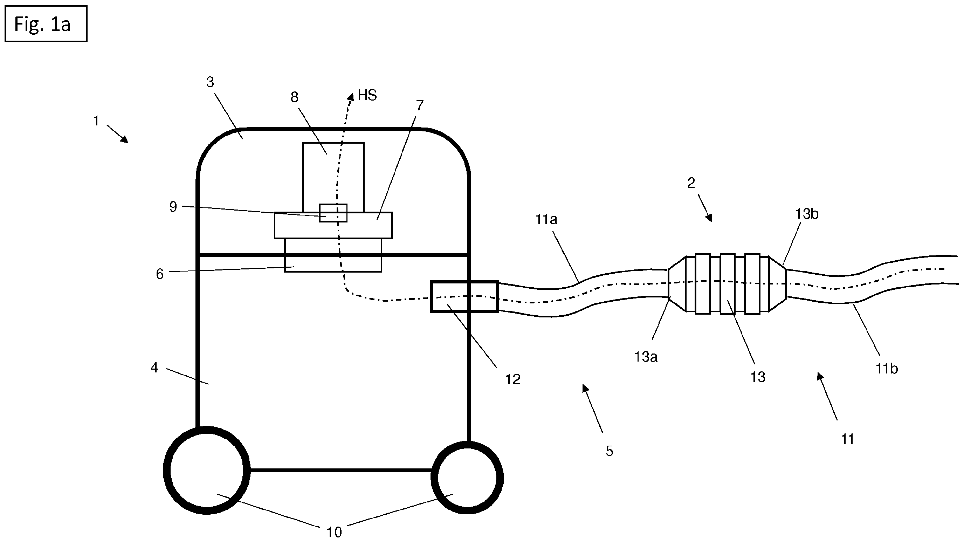

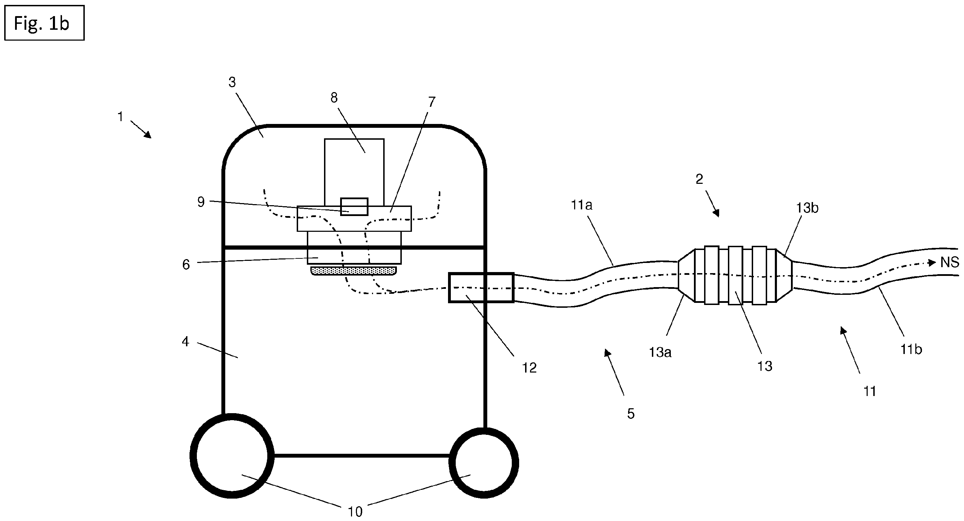

Figur 1a und 1b zeigen einen Staubsauger 1 mit einer Vorrichtung 2 zum Kompensieren von Luftdruckstößen gemäß einer ersten Ausführungsform.

Der Staubsauger 1 enthält dabei im Wesentlichen einen Saugkopf 3, einen Aufbewahrungsbehälter 4 sowie eine Ansaugeinrichtung 5.

Wie den Figuren 1a bis 3 zu entnehmen ist, enthält der Saugkopf 3 wiederum im Wesentlichen einen Filter 6, eine Filterabreinigungseinrichtung 7 sowie eine Turbine 8.

Die Turbine 6 dient zum Erzeugen eines Unterdrucks, durch welchen eine erste Luftströmung LS1 in das Innere des Staubsaugers 1 strömt. Mit Hilfe der ersten Luftströmung LS1 können Staubpartikel sowie Schmutzpartikel aufgesaugt und zur Aufbewahrung in den Aufbewahrungsbehälter 4 befördert werden.

Der Filter 6 dient zum Herausfiltern von Staub- und Schmutzpartikeln aus einer vom Staubsauger 1 angesogenen ersten Luftströmung HS und schützt damit unter anderem die Turbine 8 vor Staub und Verunreinigungen.

Die Filterabreinigungseinrichtung 7 dient durch ein kurzzeitiges Umkehren der ersten Luftströmung LS1 von einer ersten Strömungsrichtung HS in eine zweite Luftströmung LS2 entlang einer zweiten Strömungsrichtung NS zum Reinigen des Filters 6. Durch die plötzliche Umkehr der Luftströmung wird ein Druckstoß erzeugt, der den am bzw. im Filter 6 angesammelte Staub und Schmutz in Richtung Aufbewahrungsbehälter 4 abschlägt. Der Filter 6 ist hierdurch wieder frei und funktionsfähig. Anschließend wird mit Hilfe der Filterabreinigungseinrichtung 7 die zweite Luftströmung LS2 entlang der zweiten Strömungsrichtung NS wieder zu der ersten Luftströmung LS1 entlang der ersten Strömungsrichtung HS umgestellt. Die Funktion und insbesondere die Umstellung der Filterabreinigungseinrichtung 7 auf die erste oder zweite Luftströmung LS1, LS2 wird durch eine Steuerungseinrichtung 9 gesteuert.

Der Aufbewahrungsbehälter 4 ist im Wesentlichen als Container mit einem Aufnahmevolumen gestaltet. An der Unterseite des als Containers ausgestalteten Aufbewahrungsbehälters 4 sind für die Mobilität des Staubsaugers 1 vier Räder 10 vorgesehen. In den Figuren sind lediglich zwei Räder 10 gezeigt.

Die Ansaugeinrichtung 5 enthält im Wesentlichen einen Staubsaugerschlauch 11, ein Befestigungselement 12 sowie eine Düse. Bei der Düse kann es sich beispielweise um eine Bodendüse handeln. Die Düse ist in den Figuren nicht dargestellt.

Das Befestigungselement 12 ist im Wesentlichen als zylindrisches Rohr ausgestaltet und dient als Schnittstelle bzw. Anschluss für den Staubsaugerschlauch 11 an dem Aufbewahrungsbehälter 4.

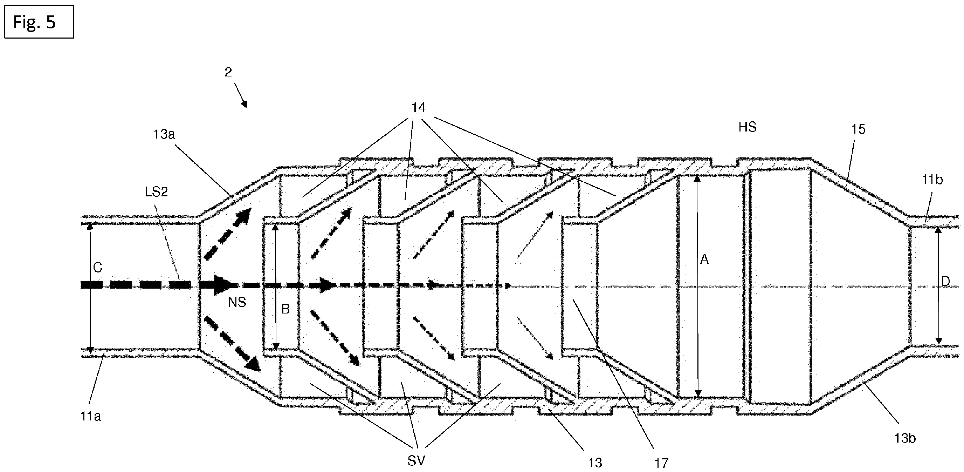

Figur 5 bis 7 zeigt die Vorrichtung 2 zum Kompensieren von Luftdruckstößen gemäß einer ersten Ausgestaltungsform. Die Vorrichtung 2 enthält dabei im Wesentlichen einen Grundkörper 13 sowie Strömungswiderstandselemente 14.

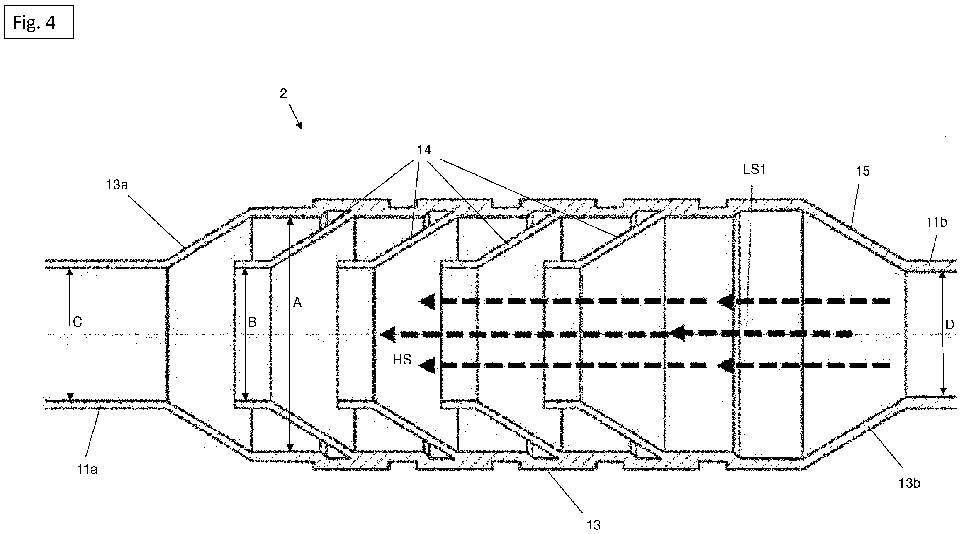

Der Grundkörper 13 gemäß der ersten Ausgestaltungsform weist eine im Wesentlichen zylindrische, rohrförmige Form mit einem ersten Ende 13a und einem zweiten Ende 13b auf. Der Grundkörper 13 weist eine erste Durchströmungsquerschnittsfläche A auf. Wie insbesondere den Figuren 4 bis 6 zu entnehmen ist, enthält der zylindrische rohrförmige Grundkörper 13 sowohl an dem ersten als auch an dem zweiten Ende 13a, 13b jeweils ein trichterförmiges Anbindungselement 15. Das Anbindungselement 15 dient für den Übergang bzw. die Anbindung des Grundkörpers 13 an den Staubsaugerschlauch 11. Gemäß der ersten Ausgestaltungsform in Figur 1a und 1b besteht der Staubsaugerschlauch 11 aus einem ersten Schlauchabschnitt 11a mit einer Durchströmungsquerschnittsfläche C und zweiten Schlauchabschnitt 11b mit einer Durchströmungsquerschnittsfläche D. Der erste Schlauchabschnitt 11a erstreckt sich von dem Befestigungselement 12 bis zu dem ersten Ende 13a des Grundkörpers 13. Der zweite Schlauchabschnitt 11b erstreckt sich von dem zweiten Ende 13b des Grundkörpers 13 bis zu der (nicht gezeigten) Düse.

Das Strömungswiderstandselement 14 ist gemäß einer ersten Ausgestaltungsform im Wesentlichen als Trichter ausgestaltet. Das als Trichter ausgestaltete Strömungswiderstandselement 14 enthält ein erstes Ende 14a und ein zweites Ende 14b. Mit dem ersten Ende 14a ist das als Trichter ausgestaltete Strömungswiderstandselement 14 an einer Innenwandelfläche 16 des Grundkörpers 13 positioniert. Das zweite Ende 14b des Strömungswiderstandselements 14 ragt in das Innere des Grundkörpers 13, sodass eine kreisrunde Öffnung 17 des als Trichter ausgestalteten Strömungswiderstandselements 14 eine zweite Durchströmungsquerschnittsfläche B bildet. Wie in den Figuren 4 bis 6 gezeigt, ist die erste Durchströmungsquerschnittsfläche A größer als die zweite Durchströmungsquerschnittsfläche B. Gemäß einer vorteilhaften Ausgestaltungsform ist die erste Durchströmungsquerschnittsfläche A doppelt so groß wie die zweite Durchströmungsquerschnittsfläche B. Es ist jedoch auch möglich, dass die zweite Durchströmungsquerschnittsfläche B lediglich ein Zehntel der ersten Durchströmungsquerschnittsfläche A beträgt. Gemäß der ersten Ausgestaltungsform entspricht die Durchströmungsquerschnittsfläche B an dem zweiten Ende 14b des Strömungswiderstandselements 14 im Wesentlichen der Durchströmungsquerschnittsfläche C des ersten Schlauchabschnitts 11a sowie der Durchströmungsquerschnittsfläche D des zweiten Schlauchabschnitts 11b. Gemäß einer alternativen Ausgestaltungsform können jedoch die Durchströmungsquerschnittsflächen B, C und D auch unterschiedlich groß sein. In jedem Falle ist die Durchströmungsquerschnittsfläche A größer als die Durchströmungsquerschnittsfläche B.

Das Strömungswiderstandselement 14 ist so im Inneren des Grundkörpers 13 positioniert und ausgerichtet, dass zwischen einer äußeren Mantelfläche 18 des als Trichter ausgestalteten Strömungswiderstandselements 14 und einer inneren Mantelfläche 16 des Grundkörpers 13 ein Stauvolumen SV für mindestens einen Teil der zweiten Luftströmung LS2 entsteht. Das Stauvolumen kann auch als Stauraum oder Totraum bezeichnet werde.

Wie in Figur 1a dargestellt strömt bei der Verwendung des Staubsaugers 1 im Staubsaugmodus eine erste Luftströmung LS1 in einer ersten Strömungsrichtung HS von der (nicht gezeigten) Bodendüse über den Staubsaugerschlauch 11 durch die Vorrichtung 2 zum Kompensieren von Luftdruckstößen, den Aufbewahrungsbehälter 4, den Filter 6, die Turbine 8 und wieder aus dem Saugkopf 3 heraus. Im Staubsaugmodus wird hierdurch Staub und Verschmutzungspartikel aufgesogen. Im Staubsaugermodus strömt die erste Luftströmung LS1 von dem zweiten Ende 13b des Grundkörpers 13 entlang dem Grundkörper 13 durch die Strömungswiderstandselemente 14 zu dem ersten Ende 13a des Grundkörpers 13 (vgl. Figur 5). In der ersten Strömungsrichtung HS ist die erste Luftströmung LS1 nicht wesentlich beeinträchtigt.

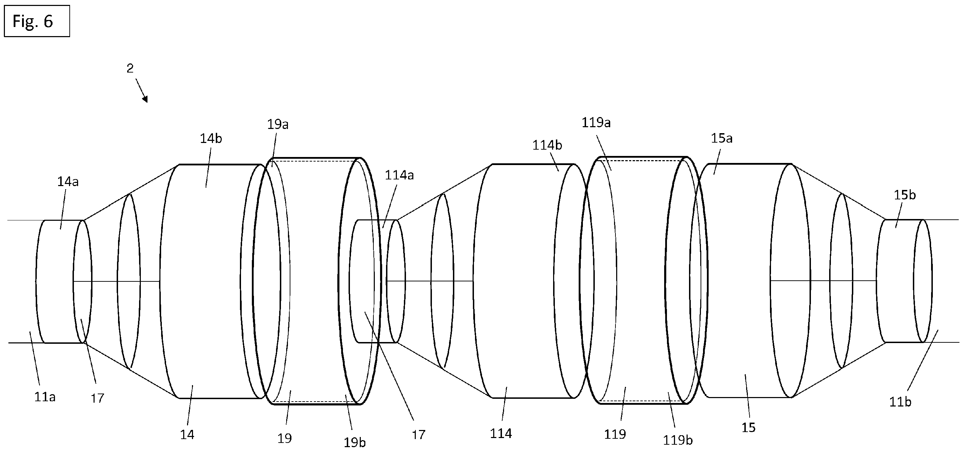

Figur 1b zeigt den Staubsauger 1 in einem Filterabreinigungsmodus, mit dem der Filter 6 (wie vorstehend beschrieben) von dem angesogenen Staub und Schmutz befreit wird. Durch kurzzeitige Umkehr der ersten Luftströmung LS1 entlang der ersten Strömungsrichtung HS in die zweite Luftströmung LS2 entlang der zweiten Strömungsrichtung NS wird ein Druckstoß (auch Luftdruckstoß) durch den Filter 6 erzeugt. Dieser Druckstoß begrenzt sich nicht auf den Filter 6, sondern breitet sich auch entlang der zweiten Luftströmungsrichtung NS in die Ansaugeinrichtung und insbesondere in den Staubsaugerschlauch 11 aus.
Wie in Figur 6 gezeigt, strömt die zweite Luftströmung LS2 entlang der zweiten Strömungsrichtung NS von dem ersten Ende 13a des Grundkörpers 13 durch den Grundkörper 13 und die Strömungswiderstandselemente 14 zu dem zweiten Ende 13b des Grundkörpers 13. Durch die trichterförmigen Strömungswiderstandselemente 14 strömt sukzessiv ein Teil der zweiten Luftströmung LS2 in den Stauvolumen SV zwischen Grundkörper 13 und Strömungswiderstandselement 14. Der Druckstoß wird hierdurch dissipiert, sodass schließlich der Druckstoß bzw. die zweite Luftströmung LS2 am zweiten Ende 13b des Grundkörpers 13 der Vorrichtung 2 vollständig zerstreut bzw. dissipiert ist.

Wie vorstehend bereits erwähnt, zeigt Figur 1 die erste Ausführungsform des erfindungsgemäßen Staubsaugerschlauchs 11, wobei die Vorrichtung 2 zum Kompensieren von Luftdruckstößen zwischen einem ersten und zweiten Schlauchabschnitt 11a, 11b positioniert ist. Die zwei Schlauchabschnitte 11a, sind im Wesentlichen gleichlang.

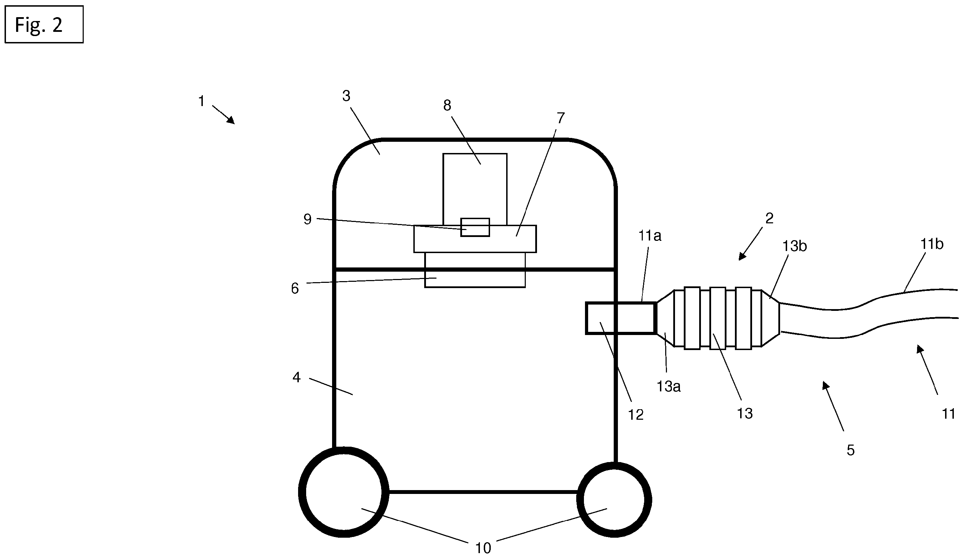

Figur 2 zeigt eine zweite Ausführungsform des erfindungsgemäßen Staubsaugerschlauchs 11, wobei die Vorrichtung 2 zum Kompensieren von Luftdruckstößen zwischen einem ersten und zweiten Schlauchabschnitt 11a, 11b positioniert ist. Der erste Schlauchabschnitt 11a ist dabei kürzer als der zweite Schlauchabschnitt 11b.

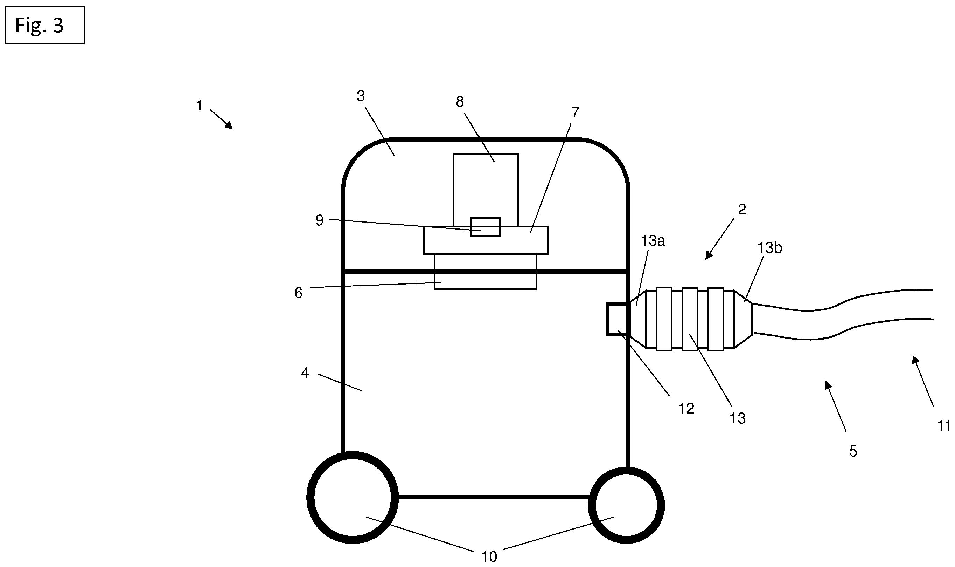

Figur 3 zeigt eine dritte Ausführungsform des erfindungsgemäßen Staubsaugerschlauchs 11, wobei die Vorrichtung 2 zum Kompensieren von Luftdruckstößen direkt an dem Befestigungselement 12 für den Aufbewahrungsbehälter 4 positioniert ist. Es existiert somit nur ein Schlauchabschnitt bzw. ein durchgehender Staubsaugerschlauch 11.

Gemäß einer weiteren Ausführungsform der Vorrichtung 2 zum Kompensieren von Luftdruckstößen ist die Vorrichtung 2 modular aufgebaut bzw. weist eine modulare Bauweise auf (vgl. Explosionsdarstellung in Figur 6). Hierzu enthält die Vorrichtung 2 ein erstes und zweites Strömungswiderstandselement 14, 114, ein erstes und zweites Verbindungselement 19, 119 sowie ein Anbindungselement 15. Das Anbindungselement 15 entspricht im Wesentlichen der Form und Ausgestaltung des ersten oder zweiten Strömungswiderstandselement 14, 114.
Zur Bildung der Vorrichtung 2 ist das erste Ende 14a des ersten Strömungswiderstandselements 14 an dem ersten Schlauchabschnitt 11a positioniert. Das zweite Ende 14b des ersten Strömungswiderstandselements 14 ist wiederum an dem ersten Ende 19a des ersten Verbindungselements 19 montiert. Das erste Ende 114a des zweiten Strömungswiderstandselements 114 ist im Inneren des ersten Strömungswiderstandselements 14 positioniert. Das zweite Ende 19b des ersten Verbindungselements 19 ist an dem zweiten Ende 114b des zweiten Strömungswiderstandselements 114 befestigt. Das erste Ende 119a des zweiten Verbindungselement 119 ist ebenfalls an dem zweiten Ende 114b des zweiten Strömungswiderstandselements 114 positioniert. Schließlich ist das zweite Ende 119b des zweiten Verbindungselements 119 an dem ersten Ende 15a des Anbindungselements 15 befestigt. Das zweite Ende 15b des Anbindungselements 15 ist an dem zweiten Schlauchabschnitt 11b des Staubsaugerschlauchs 11 befestigt. Die Befestigungen sind dabei wiederlösbar gestaltet, sodass die einzelnen Bestandteile der Vorrichtung 2 wieder voneinander gelöst werden können. Die Vorrichtung 2 kann dadurch modular gestaltet und die Anzahl der Strömungswiderstandselemente 14, 114 für die Vorrichtung 2 frei gewählt werden.

Das erste Ende 14a des ersten Strömungswiderstandselements 14 sowie das erste Ende 114a des zweiten Strömungswiderstandselements 114 kann auch als freies Ende bezeichnet werden.

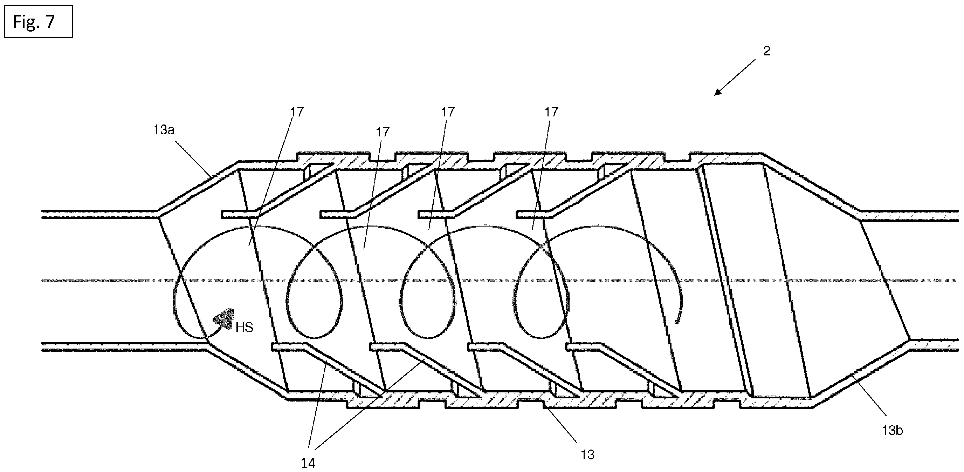

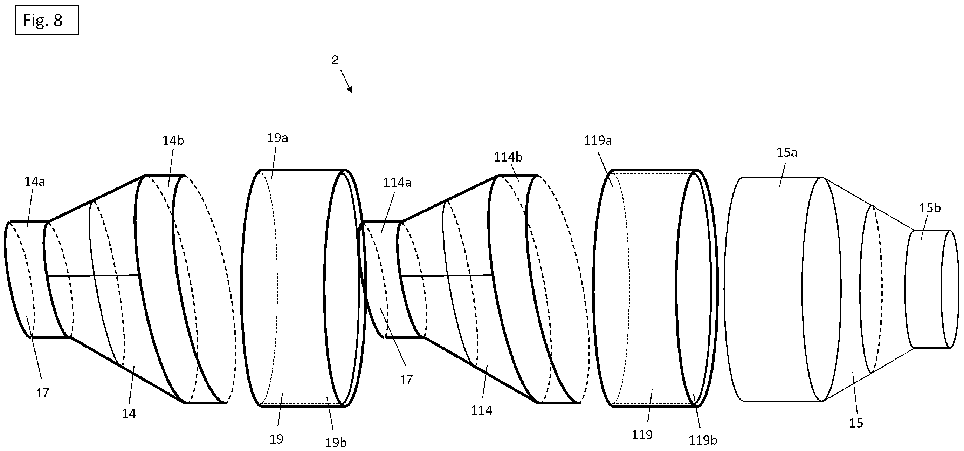

Figur 7 und 8 zeigen eine weitere Ausführungsform der Vorrichtung 2 zum Kompensieren von Luftdruckstößen, bei der das trichterförmige Strömungswiderstandselement 14 asymmetrisch ausgestaltet sind. Die Trichter der Strömungswiderstandselemente 14 weisen damit eine Spiralgeometrie auf. Wie in den Figuren angedeutet, ist die Öffnung 17 an dem Strömungswiderstandselement 14 nicht (wie in der ersten Ausführungsform) kreisrund, sondern in Form einer Ellipse. Durch diese spezielle Ausgestaltungsform wird die erste Luftströmung LS1 entlang der ersten Strömungsrichtung HS und im Inneren des Grundkörpers 13 in eine spiralförmige Drehbewegung versetzt.

Figur 8 zeigt eine weitere Ausgestaltungsform bei der die einzelnen Bestandteile der Vorrichtung 2 zum Kompensieren von Luftdruckstößen zum einen modular und zum anderen die Öffnung an dem Strömungswiderstandselement 14, 114 nicht (wie in der ersten Ausführungsform) kreisrund, sondern in Form einer Ellipse ausgestaltet sind.

### Bezugszeichenliste

- 1: Staubsauger
- 2: Vorrichtung für einen Staubsauger zum Kompensieren von Luftdruckstößen
- 3: Saugkopf
- 4: Aufbewahrungsbehälter
- 5: Ansaugeinrichtung
- 6: Filter
- 7: Filterabreinigungseinrichtung
- 8: Turbine
- 9: Steuerungseinrichtung
- 10: Räder
- 11: Staubsaugerschlauch
- 11a: erster Schlauchabschnitt
- 11b: zweiter Schlauchabschnitt
- 12: Befestigungselement
- 13: Grundkörper
- 13a: erstes Ende des Grundkörpers
- 13b: zweites Ende des Grundkörpers
- 14: erstes Strömungswiderstandselement
- 14a: erstes Ende des ersten Strömungswiderstandselements
- 14b: zweites Ende des ersten Strömungswiderstandselements
- 114: zweites Strömungswiderstandselement
- 114a: erstes Ende des zweiten Strömungswiderstandselements
- 114b: zweites Ende des zweiten Strömungswiderstandselements
- 15: Anbindungselement
- 15a: erstes Ende des Anbindungselements
- 15b: zweites Ende des Anbindungselements
- 16: Innenwandelfläche des Grundkörpers
- 17: Öffnung an Strömungswiderstandselement
- 18: Mantelfläche des Strömungswiderstandselements
- 19: erstes Verbindungselement
- 19a: erstes Ende des ersten Verbindungselements
- 19b: zweites Ende des ersten Verbindungselements
- 119: zweites Verbindungselement
- 119a: erstes Ende des zweiten Verbindungselements
- 119b: zweites Ende des zweiten Verbindungselements
- LS1: erste Luftströmung
- LS2: zweite Luftströmung
- HS: erste Strömungsrichtung
- NS: zweite Strömungsrichtung
- SV: Stauvolumen
- A: erste Durchströmungsquerschnittsfläche
- B: zweite Durchströmungsquerschnittsfläche
- C: Durchströmungsquerschnittsfläche des ersten Schlauchabschnitts
- D: Durchströmungsquerschnittsfläche des zweiten Schlauchabschnitts

## Patentansprüche

1. Vorrichtung (2) für einen Staubsauger (1) zum Kompensieren von Luftdruckstößen, durch welche eine erste Luftströmung (LS1) in eine erste Strömungsrichtung (HS) sowie eine zweite Luftströmung (LS2) in eine zweite Strömungsrichtung (NS) strömen kann, **gekennzeichnet durch** einen Grundkörper (13) mit einer ersten Durchströmungsquerschnittsfläche (A) und wenigstens einem Strömungswiderstandselement (14, 114), welches von dem Grundkörper (13) mit einem freien Ende (14a, 114a) wenigstens abschnittsweise in die zweite Strömungsrichtung (NS) ragt, zum Erzeugen einer zweiten Durchströmungsquerschnittsfläche (B), wobei die erste Durchströmungsquerschnittsfläche (A) größer ist als die zweite Durchströmungsquerschnittsfläche (B), sodass die in die zweite Strömungsrichtung (NS) strömende zweite Luftströmung (LS2) vermindert wird.

2. Vorrichtung (2) nach Anspruch 1,
**dadurch gekennzeichnet, dass** der Grundkörper (13) in Form eines Zylinders und das wenigstens eine Strömungswiderstandselement (14, 114) in Form eines Trichters ausgestaltet ist, sodass wenigstens abschnittsweise zwischen einer äußeren Mantelfläche (18) des Strömungswiderstandselements (14, 114) und einer inneren Mantelfläche (16) des Grundkörpers (13) ein Stauvolumen (SV) für mindestens einen Teil der zweiten Luftströmung (LS2) entsteht.

3. Staubsaugerschlauch (11) mit einer Vorrichtung (2) nach wenigstens einem der Ansprüche 1 oder 2.

4. Staubsauger (1) mit einer Vorrichtung (2) nach wenigstens einem der Ansprüche 1 oder 2.
